# DEMANDE DE BREVET EUROPEEN

(11) **EP 4 386 716 A1**
(43) Date de publication de la demande: **19.06.2024**
(21) Numéro de dépôt: 23214097.0
(22) Date de dépôt: 04.12.2023
(51) Int. Cl.: G08G 5/04, G08G 5/06, G01S 13/934, G01S 13/86, G01S 17/933, G06V 20/58

(54) **PROCÉDÉ ET SYSTÈME D AIDE À L ÉVITEMENT D'UNE COLLISION AVEC UN OBSTACLE POUR UN AÉRONEF ROULANT SUR UN AÉRODROME**

(30) Priorité: 16.12.2022 FR 2213613
(71) Demandeur: Airbus Operations SAS, 31060 Toulouse (FR)
(72) Inventeur: CLAUDEL, Emilie, 31060 TOULOUSE (FR); SENTISSI, Isabelle, 31060 TOULOUSE (FR); FAURE, Louise, 31060 TOULOUSE (FR)
(74) Mandataire: Gevers & Orès

(57) **Abrégé**

- Le système (1) comporte une unité pour surveiller l'aérodrome (2) de manière à pouvoir détecter au moins un obstacle (7), pour déterminer une position relative courante et une vitesse relative courante de l'aéronef (AC) par rapport à l'obstacle (7) détecté, et pour détecter une collision future ou potentielle de l'aéronef (AC) avec l'obstacle (7) en fonction au moins de cette position relative courante et de cette vitesse relative courante, le système (1) comportant également une unité pour, dans le cas d'une détection d'une collision future, mettre en oeuvre au moins une action destinée à aider à éviter cette collision future, le système (1) étant notamment configuré pour apporter une aide au pilote de l'aéronef (AC) en améliorant sa sensibilisation concernant la collision future, au moyen de messages d'alerte et/ou d'aide à la navigation au sol, et en prévoyant une protection en dernier ressort sous forme d'une manoeuvre d'évitement automatique.

## Description

### Domaine technique

La présente invention concerne un procédé et un système d'aide à l'évitement d'une collision avec un obstacle pour un aéronef roulant sur un aérodrome.

### Etat de la technique

Dans le cadre de la présente invention, on entend :
- par collision, un contact physique entre l'aéronef et un autre objet (ou entité physique), mobile ou immobile, se déplaçant ou se trouvant sur l'aérodrome. Dans le cadre de la présente invention, un objet peut être un élément matériel se trouvant sur l'aérodrome (tel que notamment un élément d'infrastructure de l'aérodrome ou un engin) ou un être vivant (tel qu'un animal ou un être humain) se trouvant sur l'aérodrome ;
- par obstacle, un objet qui présente un risque de collision avec l'aéronef.

Actuellement, aucune fonction certifiée n'assiste complètement le pilote d'un aéronef roulant au sol sur un aérodrome pour l'aider à effectuer une surveillance de tels obstacles présentant un risque de collision avec l'aéronef.

Or, lors du roulement sur l'aérodrome, le pilote doit réaliser des tâches et des vérifications nécessitant notamment de regarder des affichages de type tête basse dans le poste de pilotage de sorte qu'il lui est difficile de regarder continuellement à l'extérieur de l'aéronef pour surveiller en permanence tous les objets susceptibles de devenir de tels obstacles.

Aussi, il pourrait être utile de disposer d'une solution permettant d'assister un pilote d'un aéronef roulant sur un aérodrome dans la détection d'obstacles, afin de lui faciliter la surveillance et l'aider à éviter une collision potentielle.

### Exposé de l'invention

Un objectif de la présente invention est d'apporter une telle solution. Pour ce faire, la présente invention concerne un procédé d'aide à l'évitement d'une collision avec un obstacle (à savoir un objet mobile ou un objet immobile) pour un aéronef roulant sur un aérodrome.

Selon l'invention, ledit procédé comporte au moins les étapes suivantes :
- une étape de surveillance, mise en oeuvre par une unité de surveillance, au moins pour surveiller l'aérodrome de manière à pouvoir détecter au moins un obstacle, pour déterminer une position relative courante et une vitesse relative courante de l'aéronef par rapport à l'obstacle détecté, et pour détecter une collision future de l'aéronef avec l'obstacle en fonction au moins de cette position relative courante et de cette vitesse relative courante ; et
- une étape d'aide à l'évitement, mise en oeuvre par au moins une unité d'aide à l'évitement, au moins pour, dans le cas d'une détection d'une collision future à l'étape de surveillance, mettre en oeuvre au moins une action destinée à aider à éviter (c'est-à-dire à empêcher) la collision future.

Ainsi, le procédé est en mesure, d'une part de détecter une collision future, avec un obstacle, à savoir un objet mobile ou immobile, par l'aéronef sur lequel est mis en oeuvre ledit procédé, et d'autre part d'apporter une aide au pilote de l'aéronef pour éviter la collision dans une telle situation, et ceci en particulier, comme précisé ci-dessous, en améliorant la sensibilisation du pilote concernant la situation effective (par des messages d'alerte ou d'aide à la navigation au sol) et/ou en prévoyant une protection en dernier ressort (à savoir, en soumettant l'aéronef à une manoeuvre d'évitement automatique).

Dans le cadre de la présente invention, on entend par collision future (ou collision potentielle) un risque de collision de l'aéronef avec un obstacle, qui se produira si les conditions courantes de déplacement relatif entre l'aéronef et cet obstacle sont maintenues telles quelles.

Avantageusement, l'étape de surveillance comprend une première étape de réception de données mise en oeuvre pour recevoir des données sur l'environnement externe de l'aéronef et une étape de traitement de données mise en oeuvre pour traiter les données reçues à la première étape de réception de données de manière à détecter le cas échéant un obstacle, pour déterminer la position relative et la vitesse relative courante de l'aéronef par rapport à l'obstacle détecté, et pour détecter une collision future.

De plus, de façon avantageuse, la première étape de réception de données reçoit des données sur l'environnement externe de l'aéronef d'au moins l'une des sources de données d'un premier ensemble, ledit premier ensemble comprenant au moins certaines des sources de données suivantes de l'aéronef :
- un dispositif de détection optique ;
- un radar ;
- un lidar ;
- un système de surveillance coopératif.

En outre, de façon avantageuse, l'étape de traitement de données met en oeuvre une opération de fusion de données reçues d'au moins deux sources de données différentes dudit premier ensemble pour réaliser une consolidation des données utilisées pour détecter un obstacle.

Par ailleurs, dans un mode de réalisation particulier, l'étape de surveillance comprend une seconde étape de réception de données mise en oeuvre pour recevoir des données de position de l'aéronef et une étape de traitement de données mise en oeuvre pour traiter les données de position reçues à la seconde étape de réception de données de manière à déterminer une position dite absolue de l'aéronef et pour comparer cette position absolue de l'aéronef à une position absolue d'au moins un objet fixe de l'aérodrome afin de détecter le cas échéant une collision future avec cet objet fixe représentant un obstacle.

De plus, avantageusement, la seconde étape de réception de données reçoit des données de position d'au moins l'une des sources de données d'un second ensemble, ledit second ensemble comprenant au moins certaines des sources de données suivantes de l'aéronef :
- un système de référence inertielle ;
- un système de positionnement par satellites ;
- un odomètre ;
- un tachymètre ;
- un capteur optoélectronique.

En outre, de façon avantageuse, l'étape de traitement de données met en oeuvre une opération de fusion de données de position reçues d'au moins deux sources de données différentes dudit second ensemble pour déterminer une position absolue consolidée de l'aéronef.

Par ailleurs, dans un mode de réalisations particulier, l'étape de surveillance comprend une étape de traitement de données mise en oeuvre pour déterminer au moins une enveloppe d'alerte courante correspondant à un temps dit de collision dépendant au moins de ladite position relative courante, de la vitesse relative courante et de paramètres de l'aéronef, et pour détecter une collision future avec un obstacle détecté si l'enveloppe d'alerte courante touche cet obstacle détecté.

Avantageusement, l'enveloppe d'alerte courante présente une forme reproduisant, de façon simplifiée, une partie avant d'un contour externe de l'aéronef, et elle est positionnée à l'avant de l'aéronef à une distance correspondante.

En outre, de façon avantageuse, l'étape d'aide à l'évitement est mise en oeuvre pour émettre dans le poste de pilotage de l'aéronef au moins l'un des messages suivants : un message d'alerte, un message d'aide à la navigation au sol, ledit message étant émis sous au moins l'une des formes suivantes : visuelle, sonore.

De plus, avantageusement, l'étape d'aide à l'évitement est mise en oeuvre pour soumettre l'aéronef à une manoeuvre d'évitement automatique, par exemple à un freinage automatique, en cas d'absence d'action appropriée du pilote après l'émission d'au moins un message.

La présente invention concerne également un système d'aide à l'évitement d'une collision avec un obstacle (à savoir un objet mobile ou un objet immobile) pour un aéronef roulant sur un aérodrome.

Selon l'invention, ledit système (destiné à être monté sur l'aéronef) comporte au moins :
- une unité de surveillance configurée pour surveiller l'aérodrome de manière à pouvoir détecter au moins un obstacle, pour déterminer une position relative courante et une vitesse relative courante de l'aéronef par rapport à l'obstacle détecté, et pour détecter une collision future de l'aéronef avec l'objet en fonction au moins de cette position relative courante et de cette vitesse relative courante ; et
- une unité d'aide à l'évitement configurée pour, dans le cas d'une détection d'une collision future par l'unité de surveillance, mettre en oeuvre au moins une action destinée à aider à éviter la collision future.

La présente invention concerne également un aéronef, en particulier un avion de transport, qui comporte au moins un système d'aide à l'évitement d'une collision avec un obstacle, tel que celui décrit ci-dessus.

### Brève description des figures

Les figures annexées feront bien comprendre comment l'invention peut être réalisée. Sur ces figures, des références identiques désignent des éléments semblables.
La figure 1 est le schéma synoptique d'un système d'aide à l'évitement d'une collision avec un obstacle, selon un mode de réalisation particulier de l'invention.
La figure 2 est une vue schématique, en perspective, d'une partie d'un aérodrome sur lequel circule un aéronef équipé d'un système d'aide à l'évitement d'une collision avec un obstacle.
La figure 3 illustre schématiquement les étapes principales d'un procédé d'aide à l'évitement d'une collision avec un obstacle, selon un mode de réalisation particulier de l'invention.
La figure 4 est une vue schématique d'un aéronef vu de dessus, par rapport auquel on a représenté différentes enveloppes dites d'alerte.

### Description détaillée

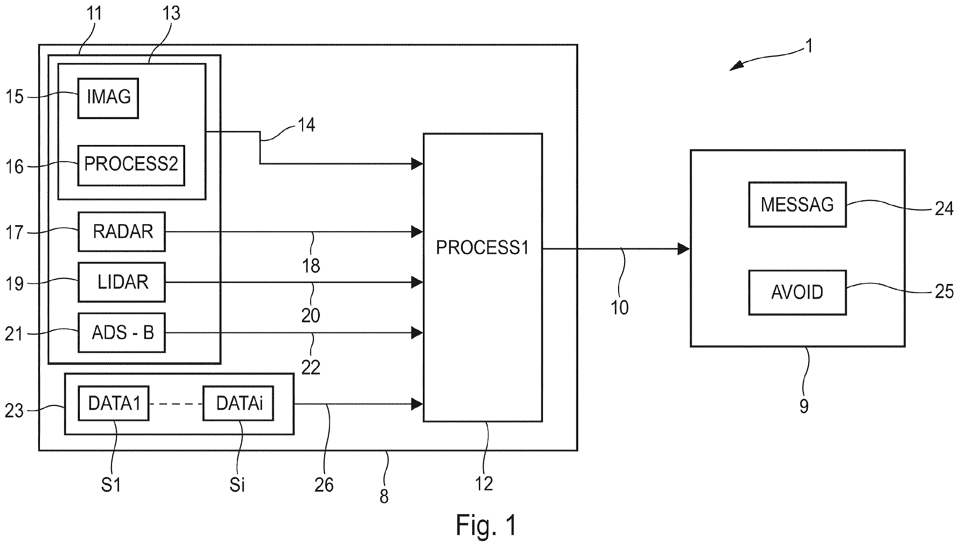

Le système 1, représenté schématiquement sur la figure 1 et permettant d'illustrer l'invention, est un système anticollision destiné à équiper un aéronef AC, en particulier un avion de transport.

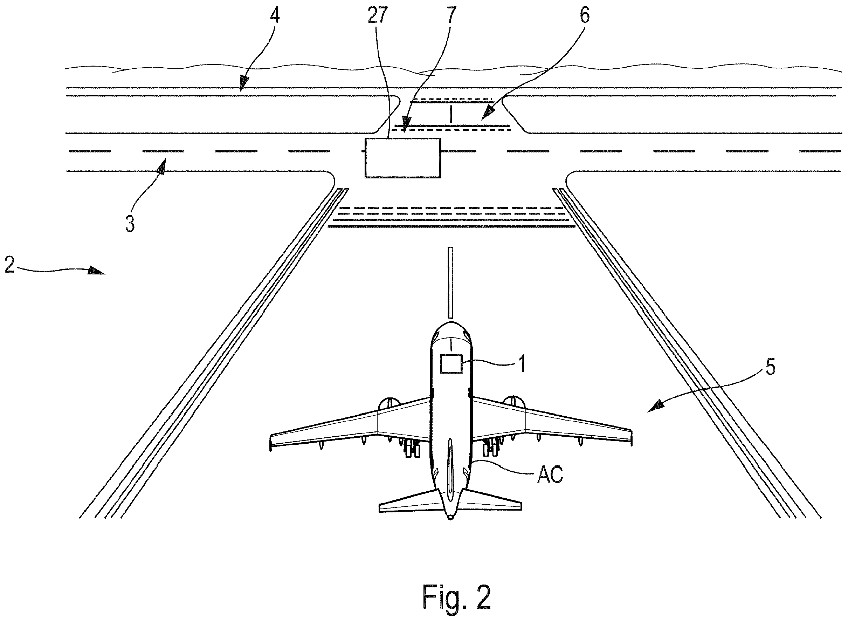

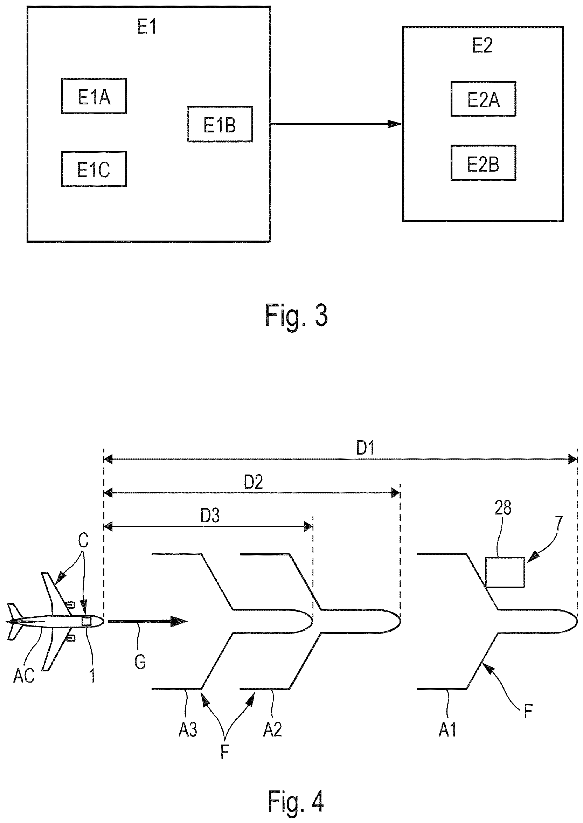

Ce système 1 (qui est embarqué sur l'aéronef AC, comme représenté très schématiquement sur la figure 2 et la figure 4) est destiné à aider l'aéronef AC, lorsqu'il roule sur un aérodrome 2, comme dans l'exemple de la figure 2, à éviter une collision avec un obstacle 7, à savoir un objet mobile ou un objet immobile, précisé ci-dessous.

Comme représenté à titre d'illustration sur la figure 2, l'aérodrome 2 comporte des voies de circulation comprenant notamment :
- des pistes (« runway » en anglais) 3 et 4 destinées au décollage et/ou à l'atterrissage des aéronefs ; et
- des voies de roulement 5 et 6 (« taxiway » en anglais) permettant à un aéronef de circuler sur l'aérodrome 2, notamment pour réaliser un trajet (en roulant au sol) entre la piste 3, 4 utilisée pour le décollage ou l'atterrissage et une zone de stationnement (non représentée).

Sur l'exemple de la figure 2, l'aéronef AC roule sur la voie de roulement 5 à destination de la piste 3.

Ledit système (anticollision) 1 comporte, comme représenté sur la figure 1 :
- une unité de surveillance 8 configurée :
   - pour surveiller l'aérodrome 2 de manière à pouvoir détecter au moins un obstacle 7 (figure 2) ;
   - pour déterminer la position relative courante et la vitesse relative courante de l'aéronef AC par rapport à un obstacle 7 détecté ; et
   - pour détecter une collision future de l'aéronef AC avec l'obstacle 7 en fonction au moins de cette position relative courante et de cette vitesse relative courante ; et
- une unité d'aide à l'évitement 9, reliée par l'intermédiaire d'une liaison 10 à l'unité de surveillance 8 et configurée pour, dans le cas d'une détection d'une collision future par l'unité de surveillance 8, mettre en oeuvre au moins une action destinée à aider à éviter cette collision future.

L'unité de surveillance 8 comprend un ensemble 11 de sources de données permettant au système 1 de recevoir des données sur l'environnement externe de l'aéronef AC. L'ensemble 11 comprend des sources de données, précisées ci-dessous, qui équipent généralement déjà l'aéronef AC.

L'unité de surveillance 8 comprend également un dispositif de traitement de données 16 (PROCESS1 pour « data Processing device » en anglais) configuré pour réaliser différents traitements et calculs précisés ci-dessous. Le dispositif de traitement de données 12 est relié aux différentes sources de données de l'ensemble 11.

Dans un mode de réalisation particulier, l'ensemble 11 comporte un système de détection optique 13, de préférence un système de détection visuelle. Ce système de détection optique 13 qui est relié par l'intermédiaire d'une liaison 14 au dispositif de traitement de données 12, comprend, comme représenté sur la figure 1 :
- un dispositif de prise d'images 15 (IMAG pour « Imaging device » en anglais) configuré pour prendre des images de l'environnement extérieur de l'aéronef AC ; et
- un dispositif de traitement d'images 16 (PROCESS2 pour « image Processing device » en anglais) configuré pour traiter au moins certaines des images prises par le dispositif de prise d'images 15 de manière à détecter, le cas échéant, un obstacle (précisé ci-dessous), lorsque cet obstacle est représenté sur au moins l'une des images traitées (c'est-à-dire dont une représentation se retrouve sur l'image).

De préférence, le dispositif de prise d'images 15 prend des images dans le visible et le système de détection optique 13 correspond alors à un système de détection visuelle. En variante, il peut également prendre des images à partir de rayonnements présentant d'autres longueurs d'onde, par exemple dans l'infrarouge, notamment en cas de visibilité extérieure réduite.

En outre, le dispositif de traitement d'images 16 met en oeuvre au moins l'une des techniques suivantes, précisées ci-après :
- une technique utilisant de l'intelligence artificielle ;
- une technique de traitement d'images.

L'ensemble 11 comprend également un radar 17 (RADAR pour « Radio Détection and Ranging » en anglais) qui est relié par l'intermédiaire d'une liaison 18 au dispositif de traitement de données 12. Le radar 18 peut fournir, de façon usuelle, des informations de distance et de vitesse, susceptibles d'être utilisées dans la détection et la localisation d'obstacles.

En outre, l'ensemble 11 comprend également un lidar 19 (LIDAR pour « Light Détection and Ranging » en anglais) qui est relié par l'intermédiaire d'une liaison 20 au dispositif de traitement de données 12. Le lidar 19 est une source de données, alternative ou complémentaire, par rapport au radar 17, pour fournir des données de distance relative ainsi que la géométrie des obstacles détectés. De plus, le lidar 19 est également en mesure de fournir, de façon usuelle, des informations ou données permettant la détection et la localisation d'obstacles.

En outre, dans un mode de réalisation particulier, l'ensemble 11 comprend également un système de surveillance coopératif 21 de type ADS-B (pour « Automatic Dépendent Surveillance-Broadcast » en anglais) qui est relié par l'intermédiaire d'une liaison 22 au dispositif de traitement de données 12 et qui représente une source de données supplémentaire. On sait que les avions de transport commerciaux diffusent, en continu, des informations ou données (par exemple, la position, la vitesse et l'indicatif d'appel) les concernant, à l'aide de ce système de surveillance coopératif 21 de type ADS-B. Certains véhicules terrestres qui circulent sur l'aérodrome 2 diffusent également ce type d'informations. Par conséquent, tous les engins mobiles, les aéronefs ou autres véhicules terrestres, qui circulent sur l'aérodrome 2 et qui sont équipés d'un système de surveillance coopératif 21 reçoivent les informations de position et de vitesse diffusées par les autres utilisateurs dudit système de surveillance coopératif 21. Il s'agit, par conséquent, d'une source de données directe d'informations concernant les objets environnants. Le système de surveillance coopératif 21 fournit donc ainsi, notamment, une position absolue de chaque utilisateur.

Dans un mode de réalisation particulier, le dispositif de traitement de données 12 met en oeuvre une opération de fusion de données. Cette opération de fusion de données fusionne les données reçues d'au moins deux sources de données différentes de l'ensemble 11 pour réaliser une consolidation de ces données qui sont ensuite utilisées par le dispositif de traitement de données 12 pour détecter un obstacle, ce qui permet d'augmenter la précision, la fiabilité et la vitesse de détection d'obstacle du système (anticollision) 1.

Par ailleurs, dans un mode de réalisation particulier, l'unité de surveillance 8 comporte également un ensemble 23 de sources de données S1, ..., Si (DATA1, ..., DATAi pour « Data sources » en anglais), i étant un entier. Cet ensemble 23 comprend au moins l'une des sources de données S1 à Si usuelles suivantes, équipant généralement l'aéronef AC :
- un système de référence inertielle ;
- un système de positionnement par satellites ;
- un odomètre ;
- un tachymètre ;
- un capteur optoélectronique.

De plus, le dispositif de traitement de données 12 qui est relié par l'intermédiaire d'une liaison 26 à l'ensemble 23 est configuré pour traiter notamment des données dites de position fournies par au moins l'une (et de préférence une pluralité) desdites sources de données S1 à Si de l'ensemble 23. Le dispositif de traitement de données 12 traite ces données de position, de manière usuelle, pour déterminer une position dite absolue de l'aéronef.

Le dispositif de traitement de données 12 est également configuré pour comparer cette position absolue de l'aéronef à la position absolue d'au moins un objet fixe de l'aérodrome, issue par exemple d'une base de données de l'aérodrome ou déterminée par ailleurs. Une telle comparaison permet, le cas échéant, de détecter une collision future avec cet objet fixe qui représente dans ce cas un obstacle.

De préférence, le dispositif de traitement de données 12 met en oeuvre une opération de fusion de données. Cette opération de fusion de données fusionne des données de position reçues d'au moins deux sources de données S1, ..., Si différentes de l'ensemble 23 afin de déterminer une position absolue consolidée de l'aéronef AC, c'est-à-dire une position absolue particulièrement précise.

Par ailleurs, dans un mode de réalisation particulier, le dispositif de traitement de données 12 est configuré pour déterminer au moins une enveloppe d'alerte courante A1, A2, A3 (figure 4) correspondant à un temps dit de collision et dépendant au moins de ladite position relative courante et de paramètres de l'aéronef AC, et pour détecter une collision future avec un obstacle 7 détecté si l'enveloppe d'alerte A1, A2, A3 touche cet obstacle 7 détecté.

Par ailleurs, l'unité d'aide à l'évitement 9 comprend un dispositif d'émission de message 24 (MESSAG pour « Message emitting device » en anglais). Le dispositif d'émission de message 24 est configuré pour émettre dans le poste de pilotage de l'aéronef AC, à destination du ou des pilotes de l'aéronef AC, au moins un message d'alerte et/ou au moins un message d'aide à la navigation au sol. Le dispositif d'émission de message 24 émet le ou les messages sous forme visuelle et/ou sous forme sonore et/ou sous tout autre forme comme par exemple une stimulation mécanique dans le siège du pilote.

De plus, l'unité d'aide à l'évitement 9 comprend également un dispositif d'évitement automatique 25 (AVOID pour «automatic Avoidance device » en anglais) configuré pour générer automatiquement une manoeuvre d'évitement, notamment un freinage, de l'aéronef AC, en cas d'absence d'action appropriée du pilote après l'émission d'un message d'alerte (de collision) par le dispositif d'émission de message 24.

Ainsi, comme cela sera décrit de façon plus détaillée ci-dessous, le système 1 est en mesure, d'une part de détecter une collision future, c'est-à-dire une collision potentielle, avec un obstacle 7, à savoir un objet mobile ou immobile, par l'aéronef AC équipé du système 1, et d'autre part d'apporter une aide au pilote de l'aéronef AC pour éviter la collision dans une telle situation, et ceci en particulier, comme également précisé ci-dessous, en améliorant la sensibilisation du pilote concernant la situation effective (par des messages d'alerte et/ou d'aide à la navigation au sol, émis par le dispositif d'émission de message 24) et/ou en apportant une protection (ou une sécurité) en dernier ressort (par une manoeuvre d'évitement automatique, notamment un freinage automatique, mise en oeuvre par le dispositif d'évitement automatique 25).

Le système 1, tel que décrit ci-dessus, est destiné à mettre en oeuvre un procédé P d'aide à l'évitement d'une collision future avec un obstacle 7 par un aéronef AC roulant sur un aérodrome 2 (figure 2), tel que présenté ci-dessous en référence à la figure 3.

Le procédé P comporte les étapes suivantes :
- une étape de surveillance E1, mise en oeuvre par l'unité de surveillance 8, au moins pour surveiller l'aérodrome 2 de manière à pouvoir détecter un obstacle 7, pour déterminer la position relative courante et la vitesse relative courante de l'aéronef AC par rapport à l'obstacle 7 détecté, et pour détecter une collision future de l'aéronef AC avec l'obstacle 7 en fonction au moins de cette position relative courante et de cette vitesse relative courante ; et
- une étape d'aide à l'évitement E2, mise en oeuvre par l'unité d'aide à l'évitement 9, au moins pour, dans le cas d'une détection d'une collision future à l'étape de surveillance E1, mettre en oeuvre au moins une action destinée à aider à éviter la collision future.

Dans le cadre de la présente invention, l'obstacle 7 peut être un objet mobile ou un objet immobile. Comme objet 27 mobile, tel que représenté très schématiquement sur la figure 2, il peut s'agir de tout type d'engin mobile, tel qu'un aéronef ou un véhicule terrestre qui se déplace sur l'aérodrome 2. Dans l'exemple de la figure 2, l'objet 27 se déplace sur la piste 3 que l'aéronef AC est en train de rejoindre. En outre, concernant un objet 28 immobile, tel que représenté très schématiquement sur la figure 4, il peut s'agir d'un objet fixe tel qu'un élément d'infrastructure de l'aérodrome 2 ou un engin mobile tel qu'un véhicule terrestre ou un aéronef qui est à l'arrêt sur l'aérodrome 2, par exemple sur une voie de circulation.

A titre d'illustration non limitative, les principaux types d'objets susceptibles d'être des obstacles potentiels, pouvant être rencontrés à la surface de l'aérodrome 2 et susceptibles être détectés par le système 1, sont notamment les suivants :
- un bâtiment, notamment un hangar ;
- un pont aérien ;
- un escalier escamotable ;
- un échafaudage ;
- une signalisation ;
- un mât d'éclairage ;
- une grue ;
- une partie d'un aéronef stationné ou à l'arrêt ou bien en mouvement (en particulier son empennage vertical, son empennage horizontal, sa queue, une extrémité d'une de ses ailes et son nez) ;
- un véhicule terrestre ;
- un véhicule de service (de ravitaillement en carburant, d'approvisionnement, ... ) de l'aérodrome ;
- une nuée d'oiseaux ;
- un piéton ;
- un petit objet (une pièce d'un aéronef, ...) ;
- un animal terrestre ;
- une clôture anti-souffle.

L'étape de surveillance E1 comprend une étape de réception de données E1A mise en oeuvre pour recevoir des données sur l'environnement externe de l'aéronef AC et une étape de traitement de données E1B mise en oeuvre pour traiter les données reçues à l'étape de réception de données E1A de manière à détecter le cas échéant un obstacle 7, pour déterminer la position relative courante et la vitesse relative courante de l'aéronef AC par rapport à l'obstacle 7 détecté, et pour détecter une collision future.

A l'étape de réception de données E1A, le système 1 reçoit des données sur l'environnement externe de l'aéronef AC d'au moins l'une des sources de données précitées de l'ensemble 11 (figure 1) de l'aéronef AC, à savoir :
- le dispositif de détection optique 13 ;
- le radar 17 ;
- le lidar 19 ;
- le système de surveillance coopératif 21.

Dans un mode de réalisation préféré, l'étape de surveillance E1 comprend, ainsi, une étape de détection optique mise en oeuvre par le dispositif de détection optique 13. Cette étape de détection optique comprend :
- une sous-étape de prise d'images, mise en oeuvre par le dispositif de prise d'images 15, pour prendre des images de l'environnement extérieur de l'aéronef AC. Le dispositif de prise d'images 15 fournit, de façon usuelle, des images 2D de la scène à l'extérieur et à l'avant de l'aéronef AC, et ceci dans le spectre visible ou dans le spectre infrarouge (notamment en cas de faible visibilité) ; et
- une sous-étape de traitement d'images, mise en oeuvre par le dispositif de traitement d'image 16, pour traiter au moins certaines des images prises à ladite sous-étape de prise d'images de manière à détecter le cas échéant un objet (mobile ou immobile) susceptible d'être un obstacle, lorsque cet objet est représenté sur au moins l'une des images traitées.

L'étape de détection optique est mise en oeuvre pour détecter tous les objets (visuels) qui sont susceptibles d'être considérés comme étant des obstacles et d'être pris en compte lors de la mise en oeuvre de l'étape de surveillance E1.

Pour mettre en oeuvre l'étape de détection optique, l'aéronef AC est équipé d'un ou de plusieurs dispositifs de prise d'images 15, à savoir de préférence des caméras, pour prendre (ou capturer) les images de l'environnement extérieur (à la sous-étape de prise d'images) pendant le roulement de l'aéronef AC et fournir au dispositif de traitement d'images 16 les images capturées. Les caméras peuvent être agencées à divers endroits sur l'aéronef, par exemple sur un carénage ventral, sur la dérive, sur le nez et/ou sur les côtés du fuselage de l'aéronef.

Dans une première variante de réalisation, la sous-étape de traitement d'images met en oeuvre une technique utilisant de l'intelligence artificielle. Différentes approches d'intelligence artificielle peuvent être utilisées, y compris des techniques d'apprentissage automatique (« machine learning » en anglais) et/ou d'apprentissage profond (« deep learning » en anglais).

Dans un mode de réalisation préféré, dans lequel le dispositif de traitement d'images 16 est basé sur de l'intelligence artificielle utilisant un système d'apprentissage automatique (« machine learning »), le système d'apprentissage automatique utilise, pour l'apprentissage, des données collectées préalablement qui sont représentatives de situations variées et conformes à celles qui peuvent être rencontrées par un aéronef circulant sur un aérodrome. Pour ce faire, des caméras sont installées sur un ou plusieurs aéronefs. Ces caméras sont identiques à celles utilisées par le système 1 ou tout au moins présentent des caractéristiques techniques proches de celles utilisées par le système 1. De plus, ces caméras sont installées sur cet aéronef ou ces aéronefs aux mêmes emplacements, ou à des emplacements aussi proches que possible, que ceux des caméras du système 1. Des images sont prises lors du roulement sur des aérodromes de l'aéronef ou des aéronefs, ainsi équipés, et les images prises sont stockées. L'ensemble des images stockées sont ensuite collectées. Les prises d'images sont réalisées sur des aérodromes différents, pour des conditions de luminosité différentes et variées (par exemple le jour, la nuit, ...) et des conditions météorologiques différentes et variées (par exemple par temps de soleil, de pluie, de neige, ...) de manière à prendre en compte l'ensemble des principales situations et conditions susceptibles d'être rencontrées par un aéronef équipé du système 1. L'ensemble des images ainsi collectées sont utilisées par le système d'apprentissage de l'intelligence artificielle du dispositif de traitement d'images 16 pour l'aider à reconnaître les objets recherchés dans les images prises par le dispositif de prise d'images 15.

Différentes techniques de traitement à base d'intelligence artificielle peuvent fournir les informations recherchées. On peut citer, à titre d'illustration :
- une détection d'objet. Dans ce cas, si un objet est représenté dans l'image, l'algorithme d'intelligence artificielle le détecte et le localise spatialement dans l'image ;
- une segmentation de l'image. Dans ce cas, chaque pixel de l'image est classé comme faisant partie ou non d'un objet, et si un objet est représenté dans l'image, l'ensemble des pixels relatifs à cet objet permettent de le détecter et le localiser.

Dans une deuxième variante de réalisation, la sous-étape de traitement d'images met en oeuvre une technique dite de traitement d'image.

On sait que les techniques de traitement d'images traitent les pixels de l'image, en utilisant des filtres et des techniques usuelles de traitement du signal, pour récupérer des points d'intérêt et des informations géométriques dans l'image afin de vérifier si un objet est représenté dans l'image, et le cas échéant le localiser spatialement dans l'image.

En outre, dans une troisième variante de réalisation, la sous-étape de traitement d'images met en oeuvre, à la fois, une technique (telle que celle décrite ci-dessus) utilisant de l'intelligence artificielle et une technique de traitement d'images (telle que celle également décrite ci-dessus).

La calibration du dispositif de prise d'images 15 (paramètres intrinsèques et extrinsèques) permet alors au dispositif de traitement d'images 16 du système 1 de déterminer la position relative de l'aéronef AC par rapport à l'obstacle 7 détecté.

Grâce aux prises d'images successives et à l'estimation des positions relatives successives de l'aéronef AC, le dispositif de traitement d'images 16 est également en mesure de déterminer la vitesse relative de l'aéronef AC par rapport à l'obstacle 7 détecté.

Pour un obstacle plus éloigné de l'aéronef AC, la détection optique à l'aide du système de détection optique 13 peut ne pas être suffisamment précise pour estimer la distance de l'obstacle par rapport à l'aéronef AC.

Aussi, en complément ou en variante de l'étape de détection optique, le système 1 utilise, à l'étape de réception de données E1A, le radar 17 qui fournit des informations de distance avec une précision suffisante pour le système 1. De plus, avec un traitement de signal, le radar 17 représente également une source d'informations utile pour la détection et la localisation d'obstacles.

En outre, en complément ou en variante, le système 1 peut également utiliser, à l'étape de réception de données E1A, le lidar 19 qui est une alternative au radar 17 pour fournir des informations de distance relative ainsi que la géométrie des obstacles détectés. De plus, avec un traitement de signal, le lidar 19 est également une source d'informations utile pour la détection et la localisation d'obstacles.

Par ailleurs, en complément ou en variante d'une ou plusieurs des sources de données 13, 17 et 19 précitées, l'étape de réception de données E1A peut également utiliser le système de surveillance coopératif 21 de type ADS-B (pour « Automatic Dépendent Surveillance-Broadcast » en anglais). Ce système de surveillance coopératif 21 est une source de données directe fournissant des données de position et de vitesse des objets environnants équipé d'un tel système. Le système de surveillance coopératif 21 fournit une position absolue de chaque utilisateur (les aéronefs et certains véhicules terrestres notamment). La connaissance, d'une part, de la position absolue de l'aéronef AC et d'autre part, de la position absolue d'un obstacle 7 permet, au dispositif de traitement de données 12, de déterminer la position relative de l'aéronef AC par rapport audit obstacle 7.

Par ailleurs, dans un mode de réalisation préféré, l'étape de traitement de données E1B met en oeuvre une opération de fusion de données. Cette opération de fusion de données fusionne, à l'aide d'un algorithme usuel de fusion de données, les données reçues d'au moins deux sources de données différentes de l'ensemble 11 à l'étape de réception de données E1A. Cette opération de fusion de données, de type usuel, permet de consolider les données utilisées pour détecter un obstacle. Ceci permet d'augmenter la précision et la fiabilité de la détection.

Par ailleurs, dans un mode de réalisation particulier, l'étape de surveillance E1 comprend également une étape de réception de données E1C mise en oeuvre pour recevoir des données de position de l'aéronef AC, à partir d'au moins l'une des sources de données S1 à Si de l'ensemble 23 (figure 1).

De préférence, à la seconde étape de réception de données E1C, le système 1 reçoit des données de position d'au moins l'une des sources de données suivantes de l'ensemble 23 de l'aéronef AC :
- un système de référence inertielle ;
- un système de positionnement par satellites ;
- un odomètre ;
- un tachymètre ;
- un capteur optoélectronique.

Dans un mode de réalisation particulier, l'étape de traitement de données E1B :
- traite les données de position reçues à l'étape de réception de données E1C de manière à déterminer une position absolue de l'aéronef AC, c'est-à-dire une position de l'aéronef AC sur l'aérodrome 2, clairement définie en tant que telle ; et
- compare cette position absolue de l'aéronef AC à une position absolue d'au moins un objet fixe de l'aérodrome 2, tel que par exemple l'objet 28 de la figure 4, pour détecter le cas échéant une collision future avec cet objet fixe 28 représentant alors un obstacle 7.

En outre, dans un mode de réalisation préféré, l'étape de traitement de données E1B met en oeuvre une opération de fusion de données. Cette opération de fusion de données fusionne, à l'aide d'un algorithme usuel de fusion de données, les données reçues d'au moins deux sources de données différentes de l'ensemble 23, à l'étape de réception de données E1C. Cette opération de fusion de données, de type usuel, permet de consolider les données reçues et d'utiliser les données ainsi consolidées pour détecter un obstacle, ce qui permet d'augmenter la précision et la fiabilité de la détection.

Par ailleurs, l'étape de traitement de données E1B, mise en oeuvre par le dispositif de traitement de données 12, réalise également les opérations suivantes :
- déterminer au moins une enveloppe d'alerte A1, A2, A3 courante (figure 4) correspondant à un temps dit de collision et dépendant au moins de ladite position relative courante et de paramètres de l'aéronef AC ; et
- détecter une collision future avec un obstacle 7 détecté si l'enveloppe d'alerte A1, A2, A3 courante touche cet obstacle 7 détecté.

Dans un mode de réalisation particulier, trois niveaux d'alerte sont prévus, à savoir dans l'ordre de déclenchement de l'alerte en cas de risque de collision :
- une indication (« advisory » en anglais) qui est optionnelle ;
- un avertissement (« caution » en anglais) ; et
- une alarme (« warning » en anglais).

Une enveloppe d'alerte (ou de sécurité) A1, A2, A3 courante est déterminée pour chacun des niveaux d'alerte considérés. Plus précisément, dans le mode de réalisation particulier précité, comme représenté sur la figure 4 :
- l'enveloppe d'alerte A1 est déterminée pour l'indication ;
- l'enveloppe d'alerte A2 est déterminée pour l'avertissement ;
- l'enveloppe d'alerte A3 est déterminée pour l'alarme.

Dans le mode de réalisation préféré, représenté sur la figure 4, chaque enveloppe d'alerte A1, A2, A3 présente une forme F simplifiée reproduisant la partie avant du contour externe C de l'aéronef AC. L'avant de l'aéronef AC est défini selon la direction et le sens de déplacement de l'aéronef AC, tel qu'indiqué par une flèche G sur la figure 4, et chaque enveloppe d'alerte A1, A2, A3 est positionnée à l'avant de l'aéronef AC à une distance D1, D2, D3 particulière de ce dernier. Cette distance D1, D2, D3 représente la distance relative entre l'aéronef AC et un obstacle 7 à partir de laquelle l'alerte correspondante sera déclenchée. La forme F simplifiée peut présenter une forme segmentée (obtenue à partir de segments adjacents), comprenant par exemple en partie des surfaces planes adjacentes

Cette forme F particulière des enveloppes d'alerte A1, A2, A3 (reproduisant, de façon simplifiée, la partie avant du contour externe C de l'aéronef AC) permet d'adapter (de façon simplifiée) la détection d'obstacle à la forme particulière de l'aéronef et ainsi de tenir compte de toutes les parties de l'aéronef et notamment de celles qui sont les plus exposées à une collision. La fonction anticollision au sol, mise en oeuvre par le système 1, qui utilise les enveloppes d'alerte A1, A2, A3 adaptées au contour externe C avant de l'aéronef AC, permet ainsi de protéger l'aéronef AC contre des collisions, notamment pour les parties suivantes dudit aéronef AC, qui sont généralement les plus exposées :
- les extrémités des ailes ;
- les nacelles des moteurs ;
- le nez ;
- l'empennage horizontal ; et
- l'empennage vertical.

La distance D1, D2, D3 est calculée en fonction d'un temps dit de collision. Le temps de collision est un temps prédéterminé. Il correspond à la durée que l'on laisse à l'aéronef AC pour atteindre l'obstacle 7 avant de déclencher l'alerte correspondante. Il est croissant en fonction du niveau d'alerte, comme représenté sur la figure 4 pour les distances D1, D2 et D3 correspondantes. A titre d'illustration non limitative, il peut par exemple être de 3 ou 4 secondes pour la distance D3, de 5 ou 6 secondes pour la distance D2, et de 8 à 10 secondes pour le distance D1.

La distance D3 est calculée (par le dispositif de traitement de données 12) en fonction du temps de collision prédéterminé correspondant, en prenant en compte les paramètres suivants comprenant des paramètres de l'aéronef AC :
- la trajectoire relative courante (position relative et vitesse relative) de l'obstacle 7 par rapport à l'aéronef AC ;
- des paramètres (vitesse, capacités de freinage) de l'aéronef AC ; et
- un éventuel ordre de décélération généré sur l'aéronef AC.

Quant aux distances D2 et D1, elles sont calculées à partir de la distance D3 en prenant en compte, à chaque fois, un temps prédéterminé correspondant de réaction et de décision du pilote.

Finalement, l'étape d'aide à l'évitement E2, mise en oeuvre par l'unité d'aide à l'évitement 9, réalise (dans le cas d'une collision future déduite à l'étape de surveillance E1) au moins une action destinée à aider à éviter (c'est-à-dire à empêcher) cette collision future.

Pour ce faire, l'étape d'aide à l'évitement E2 comprend, généralement, tout d'abord, une sous-étape E2A d'émission d'un ou de plusieurs messages à destination du pilote dans le poste de pilotage de l'aéronef AC. Le ou les messages peuvent être un ou des messages d'alerte (alertant le pilote simplement de la situation) et/ou un ou des messages d'aide à la navigation au sol (donnant des indications ou des instructions au pilote pour remédier au risque de collision, par exemple en demandant au pilote de réaliser un freinage ou un changement de direction de l'aéronef AC).

Le dispositif d'émission de message 24 émet ce ou ces messages :
- sous forme visuelle, par exemple en affichant un message ou un signe sur un écran du poste de pilotage, notamment par l'intermédiaire d'un affichage tête haute, ou en émettant un signal lumineux ; et/ou
- sous forme sonore, par exemple à l'aide d'un haut-parleur ou d'une sirène installés dans le poste de pilotage.

Chaque message d'alerte émis dépend du niveau d'alerte considéré, parmi les niveaux d'alerte possibles, et notamment parmi les trois niveaux d'alerte décrits ci-dessus. A titre d'illustration, pour ces trois niveaux d'alerte, le dispositif d'émission de message 24 peut émettre les messages suivants :
- pour une indication (« advisory » en anglais), un message visuel ;
- pour un avertissement (« caution » en anglais), des messages visuels et sonores ;
- pour une alarme (« warning » en anglais), des messages visuels et sonores, et si nécessaire une sous-étape E2B d'évitement automatique est déclenchée.

A titre d'illustration, dans l'exemple de la figure 4, l'enveloppe A1 (relative à une « indication »), qui présente la forme F, qui est positionnée à la distance D1 à l'avant de l'aéronef AC et qui se déplace donc vers l'avant (dans le sens de la flèche G) lors du roulement au sol de l'aéronef AC, vient juste de toucher l'obstacle 7 (correspondant, par exemple, à un objet 28 immobile). Cet obstacle 7 est alors détecté par le système 1 qui déclenche l'alerte correspondante, à savoir l'émission par le dispositif d'émission de message 24 dans le poste de pilotage de l'aéronef d'un message visuel correspondant à ce niveau d'alerte (« indication »).

Par ailleurs, la sous-étape E2B réalise une manoeuvre d'évitement automatique de l'aéronef AC, qui est mise en oeuvre par le dispositif d'évitement automatique 25. Pour ce faire, dans un mode de réalisation particulier, le dispositif d'évitement automatique 25 envoie automatiquement un ordre de pilotage à un système de pilotage usuel de l'aéronef AC, qui fait réaliser la manoeuvre d'évitement à l'aéronef AC. Dans un mode de réalisation particulier l'ordre de pilotage est un ordre de freinage.

Par conséquent, si à la suite des alertes d'indication, d'avertissement et d'alarme, le pilote ne prend pas les mesures appropriées, le système 1 déclenche une action ou manoeuvre d'évitement consistant à mettre en oeuvre une manoeuvre d'évitement automatique de l'obstacle 7 à l'aide du dispositif d'évitement automatique 25. La manoeuvre d'évitement peut consister à faire changer de direction de roulement à l'aéronef AC pour éviter ou contourner l'obstacle 7 ou à réaliser un freinage de l'aéronef AC. Dans ce dernier cas, un ordre de freinage automatique approprié est calculé et fourni à un système de freinage usuel de l'aéronef pour l'arrêter et ainsi empêcher la collision.

Cette sous-étape E2B met ainsi en oeuvre une protection en dernier ressort, en permettant au système 1 de réaliser automatiquement une manoeuvre d'évitement à la place du pilote.

Dans un cas particulier, si les conditions nécessaires sont remplies, cette sous-étape E2B peut être mise en oeuvre, même si la sous-étape E2A n'a pas été préalablement mise en oeuvre.

Le système 1 et le procédé P, tels que décrits ci-dessus, qui mettent en oeuvre une fonction anticollision au sol, présentent de nombreux avantages. En particulier :
- ils sont en mesure de détecter automatiquement une collision future ou collision potentielle avec un obstacle mobile ou immobile par l'aéronef équipé du système 1 ;
- ils sont en mesure d'apporter une aide au pilote de l'aéronef pour éviter la collision dans une telle situation ;
- cette aide consiste, tout d'abord, à sensibiliser le pilote sur la situation effective et éventuellement sur les actions à réaliser (à l'aide d'un ou de plusieurs messages d'alerte et/ou d'aide à la navigation au sol) ;
- cette aide permet, notamment, de fournir au pilote un niveau d'alerte pertinent en fonction du temps de collision ; et
- cette aide comprend également une protection en dernier ressort ou dernier recours (en mettant en oeuvre une manoeuvre automatique d'évitement, et notamment un freinage automatique).

## Revendications

1. Procédé d'aide à l'évitement d'une collision avec un obstacle pour un aéronef roulant sur un aérodrome, ledit procédé comportant au moins les étapes suivantes :
- une étape de surveillance (E1), mise en oeuvre par une unité de surveillance (8), au moins pour surveiller l'aérodrome (2) de manière à pouvoir détecter au moins un obstacle (7), pour déterminer une position relative courante et une vitesse relative courante de l'aéronef (AC) par rapport à l'obstacle (7) détecté, et pour détecter une collision future de l'aéronef (AC) avec l'obstacle (7) en fonction au moins de cette position relative courante et de cette vitesse relative courante, l'étape de surveillance (E1) comprenant une étape de traitement de données (E1B) mise en oeuvre pour déterminer au moins une enveloppe d'alerte (A1, A2, A3) courante correspondant à un temps dit de collision et dépendant au moins de ladite position relative courante, de la vitesse relative courante et de paramètres de l'aéronef (AC), et pour détecter une collision future avec un obstacle (7) détecté si l'enveloppe d'alerte (A1, A2, A3) courante touche cet obstacle (7) détecté, l'enveloppe d'alerte (A1, A2, A3) courante présentant une forme (F) reproduisant, de façon simplifiée, une partie avant d'un contour externe (C) de l'aéronef (AC), et elle est positionnée à l'avant de l'aéronef (AC) à une distance (D1, D2, D3) correspondante ; et
- une étape d'aide à l'évitement (E2), mise en oeuvre par au moins une unité d'aide à l'évitement (9), au moins pour, dans le cas d'une détection d'une collision future à l'étape de surveillance (E1), mettre en oeuvre au moins une action destinée à aider à éviter la collision future.

2. Procédé selon la revendication 1,
**caractérisé en ce que** l'étape de surveillance (E1) comprend une première étape de réception de données (E1A) mise en oeuvre pour recevoir des données sur l'environnement externe de l'aéronef (AC) et une étape de traitement de données (E1B) mise en oeuvre pour traiter les données reçues à la première étape de réception de données (E1A) de manière à détecter le cas échéant un obstacle (7), pour déterminer la position relative courante et la vitesse relative courante de l'aéronef (AC) par rapport à l'obstacle (7) détecté, et pour détecter une collision future.

3. Procédé selon la revendication 2,
**caractérisé en ce que** la première étape de réception de données (E1A) reçoit des données sur l'environnement externe de l'aéronef (AC) d'au moins l'une des sources de données d'un premier ensemble (11), ledit premier ensemble (11) comprenant au moins certaines des sources de données suivantes de l'aéronef (AC) :
- un dispositif de détection optique (13) ;
- un radar (17) ;
- un lidar (19) ;
- un système de surveillance coopératif (21).

4. Procédé selon la revendication 3,
**caractérisé en ce que** l'étape de traitement de données (E1B) met en oeuvre une opération de fusion de données reçues d'au moins deux sources de données (13, 17, 19, 21) différentes dudit premier ensemble (11) pour réaliser une consolidation des données utilisées pour détecter un obstacle (7).

5. Procédé selon l'une quelconque des revendications précédentes,
**caractérisé en ce que** l'étape de surveillance (E1) comprend une seconde étape de réception de données (E1C) mise en oeuvre pour recevoir des données de position de l'aéronef (AC) et une étape de traitement de données (E1B) mise en oeuvre pour traiter les données de position reçues à la seconde étape de réception de données (E1C) de manière à déterminer une position dite absolue de l'aéronef (AC) et pour comparer cette position absolue de l'aéronef (AC) à une position absolue d'au moins un objet fixe (28) de l'aérodrome (2) afin de détecter le cas échéant une collision future avec cet objet fixe (28) représentant un obstacle (7).

6. Procédé selon la revendication 5,
**caractérisé en ce que** la seconde étape de réception de données (E1C) reçoit des données de position d'au moins l'une des sources de données (S1, Si) d'un second ensemble (21), ledit second ensemble (21) comprenant au moins certaines des sources de données suivantes de l'aéronef (AC) :
- un système de référence inertielle ;
- un système de positionnement par satellites ;
- un odomètre ;
- un tachymètre ;
- un capteur optoélectronique.

7. Procédé selon la revendication 6,
**caractérisé en ce que** l'étape de traitement de données (E1B) met en oeuvre une opération de fusion de données de position reçues d'au moins deux sources de données différentes dudit second ensemble (23) pour déterminer une position absolue consolidée de l'aéronef (AC).

8. Procédé selon l'une quelconque des revendications précédentes,
**caractérisé en ce que** l'étape d'aide à l'évitement (E2) est mise en oeuvre pour émettre au moins l'un des messages suivants : un message d'alerte, un message d'aide à la navigation au sol, ledit message étant émis sous au moins l'une des formes suivantes : visuelle, sonore.

9. Procédé selon l'une quelconque des revendications précédentes,
**caractérisé en ce que** l'étape d'aide à l'évitement (E2) est mise en oeuvre pour soumettre l'aéronef (AC) à une manoeuvre d'évitement automatique, au moins en cas d'absence d'action appropriée du pilote après l'émission d'au moins un message.

10. Système d'aide à l'évitement d'une collision avec un obstacle pour un aéronef roulant sur un aérodrome, ledit système (1) comportant au moins :
- une unité de surveillance (8) configurée pour surveiller l'aérodrome (2) de manière à pouvoir détecter au moins un obstacle (7), pour déterminer une position relative courante et une vitesse relative courante de l'aéronef (AC) par rapport à l'obstacle (7) détecté, et pour détecter une collision future de l'aéronef (AC) avec l'obstacle (7) en fonction au moins de cette position relative courante et de cette vitesse relative courante, l'unité de surveillance (8) comprenant un dispositif de traitement de données (12) configuré pour déterminer au moins une enveloppe d'alerte (A1, A2, A3) courante correspondant à un temps dit de collision et dépendant au moins de ladite position relative courante, de la vitesse relative courante et de paramètres de l'aéronef (AC), et pour détecter une collision future avec un obstacle (7) détecté si l'enveloppe d'alerte (A1, A2, A3) courante touche cet obstacle (7) détecté, l'enveloppe d'alerte (A1, A2, A3) courante présentant une forme (F) reproduisant, de façon simplifiée, une partie avant d'un contour externe (C) de l'aéronef (AC), et elle est positionnée à l'avant de l'aéronef (AC) à une distance (D1, D2, D3) correspondante ; et
- une unité d'aide à l'évitement (9) configurée pour, dans le cas d'une détection d'une collision future par l'unité de surveillance (8), mettre en oeuvre au moins une action destinée à aider à éviter la collision future.

11. Aéronef,
**caractérisé en ce qu'**il comporte au moins un système (1) selon la revendication 10.
